# EUROPÄISCHE PATENTSCHRIFT

(11) **EP 3 625 384 B1**
(45) Veröffentlichungstag und Bekanntmachung des Hinweises auf die Patenterteilung: **07.06.2023**
(21) Anmeldenummer: 18742429.6
(22) Anmeldetag: 10.07.2018
(51) Int. Cl.: D02G 3/32, D02G 3/40, D06M 11/09, D01F 11/08

(54) **FADEN, GEWEBE UND VERFAHREN ZUM HERSTELLEN DERSELBEN**
THREAD, WOVEN FABRIC, AND METHOD FOR PRODUCING SAME
FIL, TISSU ET LEURS PROCÉDÉS DE FABRICATION

(30) Priorität: 11.07.2017 DE 202017003632 U
(43) Veröffentlichungstag der Anmeldung: 25.03.2020
(73) Patentinhaber: Hueck Rheinische GmbH, 41747 Viersen (DE)
(72) Erfinder: ESPE, Rolf, 44795 Bochum (DE)
(74) Vertreter: Bauer, Dirk
(86) Internationale Anmeldenummer: PCT/EP2018/068619
(87) Internationale Veröffentlichungsnummer: WO 2019/011895

(56) Entgegenhaltungen:
- WO-A1-00/53638
- WO-A1-2007/107261
- DE-U1- 20 008 249
- US-A1- 2001 029 139

## Beschreibung

Die Erfindung betrifft einen Faden aus extrudiertem und nach der Extrusion vernetztem Silikonkautschuk sowie ein Gewebe mit Kett- und/oder Schussfäden und einer Beschichtung aus vernetztem Silikonkautschuk, wobei der Faden bzw. die Beschichtung einen Fluorkautschukanteil aufweisen. Die Erfindung betrifft weiterhin Verfahren zum Herstellen solcher Fäden und Gewebe.

Solche Fäden und Gewebe kommen in Druckausgleichsgeweben (sog. Presspolstern) in hydraulischen Ein- und Mehretagenheizpressen bei der Kaschierung von Holzwerkstoffplatten mit Duroplastharz-imprägnierten Dekorpapieren oder bei der Herstellung von Hochdrucklaminaten zum Einsatz. Presspolster unterliegen in den Heizpressen hohen Dauertemperaturen, dazu kommen chemische Belastungen durch Öleinwirkung, die durch Ölleckagen aus den Anlagen entstehen. Eine weitere chemische Belastung ist die Dampfeinwirkung von beispielsweise Formaldehyd, welches aus den Platten- und Harzmaterialien entweicht. Dieses führt zu einem vorzeitigen Verschleiß der Polster, die Rückstelleigenschaften nehmen stark ab. Da ausvulkanisierte Silikonkautschuke und deren Copolymere zu klebrigen Oberflächen neigen, müssen die Fäden zudem nach der Extrusion mit Talkum, Silikonölen oder anderen Additiven behandelt werden, damit sie beim Aufwickelprozess nicht verkleben und es beim späteren Webprozess nicht zu Laufstörungen kommt. Fluorkautschuk (FKM) und Fluor-Silikonkautschuk (MFQ/FVMQ) weisen gegenüber Silikonkautschuk (MVQ/VMQ) eine bessere thermische und chemische Beständigkeit auf.

DE 200 082 49 U1 offenbart ein Presspolster mit einem Faden der einleitend genannten Art und schlägt u.a. vor, den Faden aus einem Blend-Elastomer herzustellen, indem vor der Vernetzung eine Mischung aus einem (herkömmlichen) Silikonkautschuk und einem Silikon-Fluorkautschuk hergestellt wird. Der Fluorkautschukanteil ist an der Oberfläche des Fadens zu gering, um einen ausreichenden Schutz gegen die aufgeführten Chemikalien zu bilden.

Im Hintergrund der Erfindung schlägt EP 1 300 235 A1 vor, zur Herstellung eines Presspolsters ein Gewebe aus metallischen Wärmeleitfäden mit einem Silikonkautschuk zu beschichten und die Beschichtung anschließend zu vernetzen. DE 23 19 593 A1 offenbart ein weiteres Presspolster mit in einem Silikonelastomer eingebettetem Metallgewebe. Aus EP 0 735 949 A1 ist ein Presspolster mit einem Gewebe aus Silikonelastomerfäden und Metallfäden bekannt.

WO 00/53638 A1 beschäftigt sich mit der Wiederverwendung von Fahrzeugreifen, wobei diese zunächst zu Granulat verarbeitet werden sollen. Um die Einsatzgebiete für das Gummi-Granulat zu erweitern, soll dessen Oberfläche aufbereitet werden, indem sie halogenisiert wird, beispielsweise mit fluorhaltigem Gas. WO 2007/107261 A1 beschreibt ein Verfahren sowie eine Vorrichtung zur Fluorierung von Kunststoffen.

### Aufgabe

Der Erfindung liegt die Aufgabe zugrunde, die thermische und chemische Beständigkeit zu verbessern.

### Lösung

Ausgehend von dem bekannten Faden wird nach der Erfindung vorgeschlagen, dass der Faden den Fluorkautschukanteil nur oberflächlich aufweist. Durch die Konzentration des Fluorkautschukanteils an der Oberfläche des Fadens ist deren thermische und chemische Beständigkeit deutlich verbessert.

Erfindungsgemäß wird ein Presspolster einer hydraulischen Presse aus einem Gewebe mit Kettfäden und/oder Schussfäden aus extrudiertem und nach der Extrusion vernetztem Silikonkautschuk mit einem Fluorkautschukanteil vorgeschlagen. Die Kettfäden und/oder die Schussfäden weisen den Fluorkautschukanteil nur oberflächlich auf.

Presspolster und der Betrieb von hydraulischen Pressen mit Geweben aus oder mit Silikonelastomer sind aus dem Stand der Technik bekannt.

Ausgehend vom dem bekannten Verfahren zum Herstellen eines Fadens wird nach der Erfindung vorgeschlagen, dass der Fluorkautschukanteil durch kontinuierliches, nur oberflächliches Fluorieren des vernetzten Fadens mit einem Fluorierungsgas hergestellt wird. Das erfindungsgemäße Verfahren führt zu einem der vorstehend beschriebenen Fäden und zeichnet sich gleichermaßen durch die dort genannten Vorteile aus.

Vorzugsweise werden die nach dem Verfahren hergestellten Fäden als Kettfäden und/oder Schussfäden zu einem Gewebe verwebt.

Durch die Fluorierung wird die Oberflächenspannung des Silikonelastomers (also des Silikonkautschuks nach der Vernetzung) gesenkt. Die Laufeigenschaften des Fadens in der Webmaschine werden so erheblich verbessert, das Gewebe weist im Betrieb einen verringerten Abrieb an den Elastomerfäden auf.

Vorzugsweise besteht in einem erfindungsgemäßen Verfahren das Fluorierungsgas zu mindestens 0,5 *Vol%* aus Fluorgas oder einem Fluorierungsmittel und zu mindestens 50 *Vol%* aus Inertgas. Weiter vorzugsweise besteht das Fluorierungsgas zu 10 *Vol%* aus dem Fluorgas oder Fluorierungsmittel.

### Ausführungsbeispiel

Die Erfindung wird nachfolgend anhand eines Ausführungsbeispiels erläutert: Ein erfindungsgemäßer Faden 1 wird zunächst in 1,5 *mm* Stärke kontinuierlich aus einem unvernetzten Silikonkautschuk mit einem Seelenfaden aus verlitzten Kupferfäden extrudiert und in einer an den Extruder anschließenden Heizzone zu dem Silikonelastomer vernetzt. Die Zeichnungsfigur zeigt schematisch eine Vorrichtung 2 zur weiteren Herstellung eines erfindungsgemäßen Fadens 1 nach der Extrusion und Vernetzung: Der Faden 1 durchläuft ein erstes Schleusensystem 3 in eine Behandlungskammer 4. In einem Rollensystem 5 mit auf- und absteigenden Rollen 6 bestimmen die Anzahl der Rollen 6 und deren Abstände die Einwirkungsdauer des Fluorierungsgases von etwa zwei Minuten.

Über ein Ventil 7 zum Einlass von Inertgas, ein Ventil 8 zum Einlass eines Fluorgasgemisches und ein Ventil 9 zum Einlass von Luft wird die Vorrichtung 2 begast. Über ein Dosiermessgerät 10 werden die eingeleiteten Gasmengen gemessen. Ein weiteres Ventil 11 regelt die Abluftleitung 12, und ein letztes Ventil 13 das Abgas zum Absorber 14 zur Abscheidung von Fluorwasserstoff und Fluorgasgemischen.

Der fluorierte Faden 1 verlässt über ein zweites Schleusensystem 15 die Vorrichtung 2 und wird zur anschließenden nicht dargestellten Aufwickelstation geleitet. Die Schleusensysteme 3, 15 verhindern das Austreten des nicht dargestellten Fluorierungsgases aus der Behandlungskammer 4.

Der Faden 1 weist nach Austritt aus der Heizzone noch eine Temperatur zwischen 50 und 80 °C auf, die die Fluorierung begünstigt. In einer alternativen Ausführung kann die Behandlungskammer 4 zusätzlich mit einer Heizung ausgerüstet werden.

Die Behandlungskammer 4 wird zunächst unter Atmosphärendruck bei Raumtemperatur mit Inertgas (Stickstoff, Argon, Neon, Helium oder ein anderes aus der Reihe der Edelgase) gespült und von Luft befreit, dann wird das Fluorierungsgas aus 10 *Vol*% Fluorgas (F₂) und 90 *Vol%* Stickstoff (N₂). eingeleitet. In einer alternativen Ausführung kann das Fluorierungsgas anstelle molekularen Fluors aus Halogen- oder Edelgasfluorid bestehen.

Über das Dosiermessgerät 10 wird die Füllung der Behandlungskammer 4 kontrolliert, das Ventil zum Absorber ist geschlossen. Da der Prozess kontinuierlich ist, muss das Prozessgas nachreguliert werden.

Die Fluorierung ist eine chemische Reaktion und keine Beschichtung. Daher liegt die Eindringtiefe der Fluoratome in die Oberfläche des Silikonelastomers im molekularen Bereich - der Faden bzw. die Beschichtung weisen insoweit einen nur "oberflächlichen" Fluorsilikonanteil auf. Die Hauptkette von Silikonkautschuk besteht aus alternierenden Silizium- und Sauerstoffatomen und daran ansetzenden Kohlenwasserstoffgruppen. Durch die Fluorierung werden an der Oberfläche in den Kohlenwasserstoffgruppen Wasserstoff- durch Fluoratome ersetzt. Hierbei entstehender Fluorwasserstoff (HF) wird über einen Calciumcarbonatabsorber geleitet und in Calciumfluorid (Flussspat) umgewandelt.

Nach der Fluorierung bestehen die Elastomerfäden aus Polymethylsiloxan- und Fluor-Silkonkautschuk-Copolymeren. Aufgrund der im Vergleich zu Kohlenstoff und Wasserstoff höheren Bindungsenergie von Kohlenstoff und Fluor weist der entstehende Fluorkautschuk eine deutlich höhere thermische und chemische Beständigkeit auf.

Die hohe Elastizität des Silikonelastomers bleibt erhalten. Die fluorierten Oberflächen weisen weiterhin eine Sperrschicht gegen unpolare Substanzen auf, gleichzeitig wird eine Permeation, Diffusion und Migration und der Austritt flüchtiger Bestandteile aus dem Silikonelastomer, die zur Geruchsbelästigung führen können, vermindert. Insgesamt wurde eine längere Einsatzdauer der Presspolster bei gleichbleibender Materialqualität beobachtet.

Die Beschichtung des Fadens 1 weist vor der Fluorierung eine Oberflächenspannung von 31 *mN*/*m,* nach der Fluorierung von 56 *mN*/*m auf.* Die Haft-/ Gleitreibung sinkt um die Hälfte von ca. 4,5 *N* auf 2 *N*, die Reibungskräfte auf Glas sinken von ca. 10 *N* auf 0,8 *N*. Die Oberfläche des erfindungsgemäßen Fadens 1 weist damit nach der Fluorierung keine Klebrigkeit mehr auf. Der Einsatz von Trennmitteladditiven, speziell Talkum, bevor die Fäden 1 auf den Spulen aufgewickelt werden ist nicht erforderlich, Verschmutzungen durch Ablagerungen der Trennmitteladditive an den Maschinenteilen der Webanlagen treten nicht mehr auf. In der Webanlage läuft der Faden 1 ohne Stillstandzeiten ganz besonders in Schussrichtung einwandfrei, die Haft- und Gleitreibung sowie die Klebrigkeit ist gegenüber dem zuvor bekannten Stand der Technik deutlich verringert beziehungsweise aufgehoben. Zudem ist die anaerobe Alterung durch Depolymerisation des Silikonelastomers weitestgehend verhindert.

Der erfindungsgemäße Faden 1 und das aus dem erfindungsgemäßen Gewebe hergestellte Presspolster weisen eine hohe Beständigkeit gegenüber heißem Dampf, heißen naphthenischen und aromatischen Ölen, Benzin, aliphatischen und aromatischen Olefinen, Ketone, Silikonöl, Chlorwasserstoffen, Säuren und Laugen, sowie eine gute Dauerbeständigkeit bei hohen Temperaturen (> 130°C) auf. Es zeichnet sich weiterhin durch eine hohe Flexibilität und Rückstelleigenschaft aus.

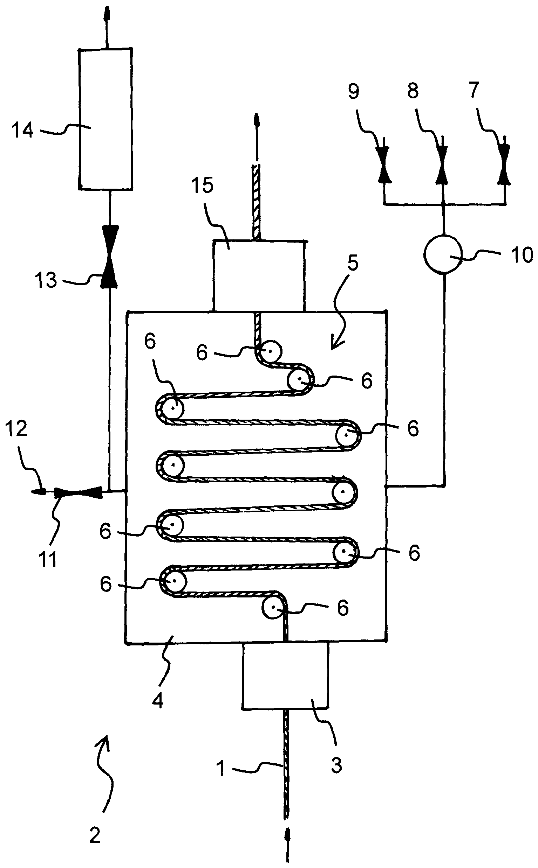

### In der Figur sind

- 1: Faden
- 2: Vorrichtung
- 3: Schleusensystem
- 4: Behandlungskammer
- 5: Rollensystem
- 6: Rolle
- 7: Ventil für Inertgas
- 8: Ventil für Fluorgas/-gemisch
- 9: Ventil für Luft
- 10: Dosiermessgerät
- 11: Ventil für Abluft
- 12: Abluftleitung
- 13: Ventil für Abluft
- 14: Absorber
- 15: Schleusensystem

## Patentansprüche

1. Presspolster einer hydraulischen Presse aus einem Gewebe mit Kettfäden und/oder Schussfäden aus extrudiertem und nach der Extrusion vernetztem Silikonkautschuk mit einem Fluorkautschukanteil, ***dadurch gekennzeichnet, dass*** die Kettfäden und/oder die Schussfäden den Fluorkautschukanteil nur oberflächlich aufweisen.

2. Verfahren zum Herstellen eines Fadens (1), wobei der Faden (1) aus Silikonkautschuk kontinuierlich extrudiert und nach der Extrusion vernetzt wird, und einen Fluorkautschukanteil aufweist, ***dadurch gekennzeichnet, dass*** der Fluorkautschukanteil durch kontinuierliches, nur oberflächliches Fluorieren des vernetzten Fadens (1) mit einem Fluorierungsgas hergestellt wird.

3. Verfahren nach Anspruch 2, ***dadurch gekennzeichnet, dass*** der Faden (1) beim kontinuierlichen Fluorieren in einem in einer Behandlungskammer (4) befindlichen Rollensystem (5) geführt wird, wobei der Faden (1) über ein erstes Schleusensystem (3) in die Behandlungskammer (4) eintritt und über ein zweites Schleusensystem (15) aus der Behandlungskammer (4) austritt.

4. Verfahren zum Herstellen eines Gewebes mit Kettfäden und Schussfäden ***dadurch gekennzeichnet, dass*** das Weben mit Kettfäden und/oder Schussfäden erfolgt, die aus nach Anspruch 2 oder 3 hergestellten Fäden bestehen.

5. Verfahren nach einem der Ansprüche 2 bis 4, ***dadurch gekennzeichnet, dass*** das Fluorierungsgas zu mindestens 0,5 Vol%, vorzugsweise 10 *Vol%* aus Fluorgas oder einem Fluorierungsmittel und zu mindestens 50 *Vol%* aus Inertgas besteht.

## Claims

1. Press pad of a hydraulic press, the pad made from a fabric comprising warp threads and/or weft threads made from extruded silicone rubber that is crosslinked after extrusion, the silicone rubber comprising a fluor rubber portion, **characterized in that** the warp threads and/or the weft threads include the fluor rubber portion exclusively on their surface.

2. Method for producing a thread wherein the thread is continuously extruded from silicone rubber and crosslinked after extrusion, the thread comprising a portion of a fluor rubber, **characterized in that** the portion of fluor rubber is produced by fluorizing exclusively a surface of the crosslinked thread by means of a fluorizing gas.

3. Method according to claim 2, **characterized in that** during the continuous fluorizing the thread is guided by a roller system located in a treatment chamber wherein the thread enters the treatment chamber via a first sluice system and leaves the treatment chamber via a second sluice system.

4. Method for producing a fabric with warp threads and weft threads, **characterized in that** the weaving is performed with warp threads and/or weft threads which warp threads and/or weft threads comprise threads manufactured according to claim 2 or 3.

5. Method according to one of claims 2 to 4 **characterized in that** the fluorizing gas is made from at least 0.5 % by volume, preferably 10 % by volume, fluoride gas or fluorization agent and from at least 50 % by volume an inert gas.

## Revendications

1. Coussinet de presse d'une presse hydraulique, composé d'un tissu avec des fils de chaîne et/ou des fils de trame en caoutchouc silicone extrudé et réticulé après extrusion après extrusion comportant une part de caoutchouc fluoré, **caractérisé en ce que** les fils de chaîne et/ou les fils de trame présentent la part de caoutchouc fluoré uniquement en surface.

2. Procédé de fabrication d'un fil (1), le fil (1) étant extrudé en continu à partir de caoutchouc silicone et réticulé après extrusion, et présentant une part de caoutchouc fluoré, **caractérisé en ce que** la part de caoutchouc fluoré est fabriquée par fluoration continue uniquement superficielle du fil réticulé (1) avec un gaz de fluoration.

3. Procédé selon la revendication 2, **caractérisé en ce que** le fil (1), lors de la fluoration continue, est guidé dans un système de rouleaux (5) se trouvant dans une chambre de traitement (4), le fil (1) entrant par un premier système de sas (3) dans la chambre de traitement (4) et sortant par un second système de sas (15) de la chambre de traitement (4).

4. Procédé de fabrication d'un tissu comportant des fils de chaîne et des fils de trame, **caractérisé en ce que** le tissage se fait avec des fils de chaîne et/ou des fils de trame qui consistent en fils fabriqués selon la revendication 2 ou 3.

5. Procédé selon une des revendications 2 à 4, **caractérisé en ce que** le gaz de fluoration est composé pour au moins 0,5 % en volume, de préférence de 10 % en volume, de gaz fluoré ou d'un agent de fluoration et, pour au moins 50 % en volume, de gaz inerte.
